# FASCICULE DE BREVET EUROPEEN

(11) **EP 1 079 998 B1**
(45) Date de publication et mention de la délivrance du brevet: **18.12.2002**
(21) Numéro de dépôt: 99920936.4
(22) Date de dépôt: 27.05.1999
(51) Int. Cl.: B60S 1/40

(54) **ESSUIE-GLACE DE VEHICULE AUTOMOBILE COMPORTANT UN VERROU SECURISE**
KRAFTFAHRZEUG-SCHEIBENWISCHER MIT GESICHERTER VERRIEGELUNG
MOTOR VEHICLE WIPER COMPRISING A SAFETY LOCK

(30) Priorité: 28.05.1998 FR 9806726
(43) Date de publication de la demande: 07.03.2001
(73) Titulaire: PAUL JOURNEE S.A., F-60240 Reilly (FR)
(72) Inventeur: JOURNEE, Maurice, F-60240 Reilly (FR)
(74) Mandataire: Lemaire, Marc
(86) Numéro de dépôt international: FR9901250
(87) Numéro de publication internationale: WO99061293

(56) Documents cités:
- DE-U- 8 710 593
- FR-A- 2 417 417
- FR-A- 2 700 309

## Description

L'invention concerne un essuie-glace de véhicule automobile comportant un verrou sécurisé.

L'invention se rapporte plus particulièrement à un essuie-glace de véhicule automobile, du type comportant un balai d'essuie-glace articulé à une extrémité libre d'un bras d'essuie-glace par l'intermédiaire d'un connecteur qui chevauche une portion de liaison du balai munie de deux ailes longitudinales parallèles entre lesquelles s'étend un élément transversal, du type dans lequel le connecteur comporte un verrou qui coulisse entre une position de déverrouillage et une position de verrouillage dans laquelle il coopère avec l'élément transversal du balai pour assurer la fixation du connecteur sur le balai, et du type dans lequel le verrou comporte une plaque supérieure de manipulation.

Un tel type d'essuie-glace est par exemple connu du document FR-A-2.700.309. Ce type d'essuie-glace est particulièrement avantageux en ce qu'il permet un montage et un démontage aisé du balai d'essuie-glace, même par un utilisateur peu averti.

Le document FR-A-2.417.417 décrit et représente un essuie-glace du type dans lequel le balai est monté à l'extrémité du bras par l'intermédiaire de l'extrémité libre de l'axe d'articulation qui est ensuite verrouillée par un organe mobile monté coulissant dans une lumière longitudinale du balai. Une plaque supérieure de l'organe de verrouillage porte à ses extrémités longitudinales opposées des moyens d'indexation qui sont destinés à coopérer avec des évidements formés dans la paroi supérieure de l'extrémité du bras pour immobiliser l'organe de verrouillage selon deux positions verrouillée et déverrouillée. Les extrémités longitudinales de la plaque supérieure sont légèrement déformables pour permettre de déplacer l'organe de verrouillage entre ses deux positions.

Cette conception présente de nombreux inconvénients.

D'une part, l'organe de verrouillage ne coopère pas directement avec le balai, mais avec son axe d'articulation. A ce titre, il ne permet pas d'absorber les jeux qui pourraient exister entre le balai et son axe d'articulation.

D'autre part, un tel essuie-glace présente des risques importants de manipulation accidentelle dans la mesure où il suffit d'accrocher par inadvertance l'organe de verrouillage selon une direction longitudinale pour provoquer son changement de position.

Enfin, les évidements formés dans la paroi supérieure de l'extrémité du bras sont particulièrement inesthétiques.

L'invention a pour but de proposer une nouvelle conception, perfectionnée, du verrou coulissant pour un essuie-glace du type décrit précédemment, qui permette d'augmenter encore la fiabilité de l'accrochage ainsi réalisé, sans en augmenter la complexité ni le coût.

Dans ce but, l'invention propose un essuie-glace du type décrit précédemment, caractérisé en ce que la plaque supérieure de manipulation est déformable élastiquement selon une direction perpendiculaire à la direction de coulissement du verrou, et en ce qu'elle porte des moyens d'immobilisation du verrou qui, lorsque le verrou est à l'état libre en position de verrouillage, coopèrent avec des moyens complémentaires solidaires du balai pour immobiliser le verrou, et qui, lorsque la plaque est déformée, sont dégagés des dits moyens complémentaires pour permettre le coulissement du verrou.

Selon des modes de réalisation de l'invention :
- le verrou comporte des moyens d'accrochage qui s'étendent vers le bas depuis une face inférieure de la plaque de manipulation et qui sont destinés à coopérer, lorsque le verrou est en position de verrouillage, avec une face inférieure de l'élément transversal, et les moyens d'accrochage portent les moyens d'immobilisation du verrou ;
- les moyens d'immobilisation sont constitués par un doigt d'orientation verticale, et les moyens complémentaires sont constitués par un évidement complémentaire dans lequel le doigt est reçu lorsque le verrou est à l'état libre ;
- le doigt d'immobilisation s'étend verticalement vers le haut depuis les moyens d'accrochage, et l'évidement est aménagé dans la face inférieure de l'élément transversal ;
- la plaque supérieure de manipulation comporte, à chacune de ses extrémités longitudinales, des moyens de guidage en coulissement du verrou sur le connecteur, et une partie centrale de la plaque, qui porte les moyens d'accrochage, est susceptible d'être déplacée verticalement par déformation élastique de la plaque ; et
- à l'état libre, la plaque supérieure présente un profil en arc de cercle à concavité tournée vers le bas.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un essuie-glace conforme aux enseignements de l'invention;
- la figure 2 est une vue en coupe longitudinale de l'essuie-glace de la figure 1, illustré lorsque le verrou est en position de verrouillage ;
- la figure 3 est une vue similaire à celle de la figure 2, illustrant le verrou lorsque sa plaque de manipulation est déformée ; et
- la figure 4 est une vue similaire à celle de la figure 3 dans laquelle le verrou est illustré en position de déverrouillage.

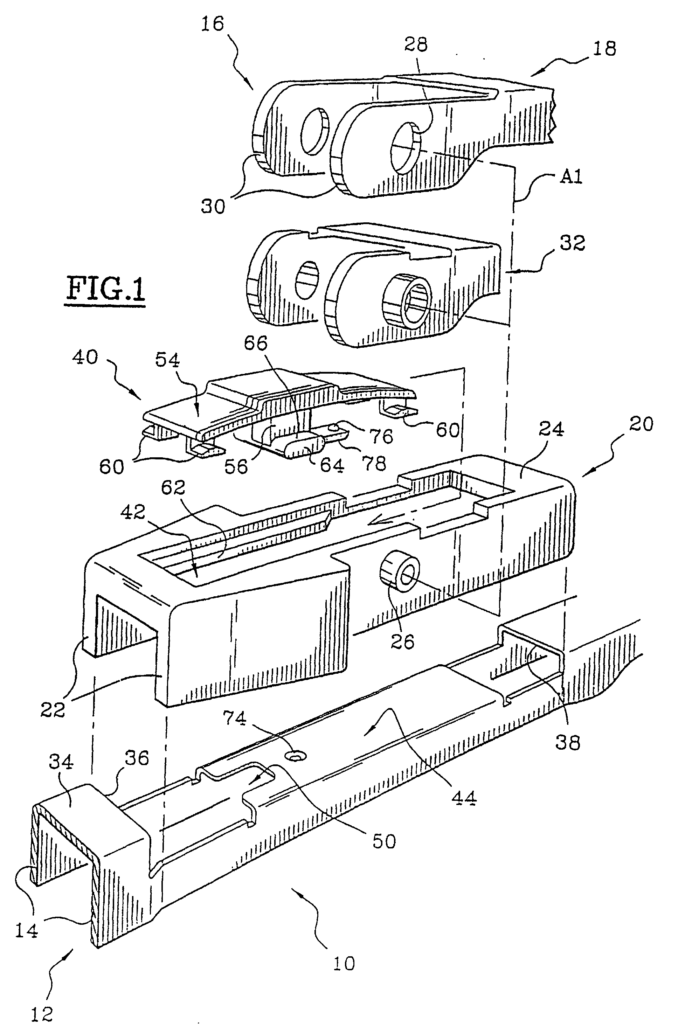

On a représenté sur la figure 1 la portion de liaison 10 d'un balai d'essuie-glace 12 de véhicule automobile. La portion de liaison 10 est par exemple formée par la portion centrale d'un étrier principal du balai 12. La portion de liaison 10 comporte pour l'essentiel deux ailes longitudinales parallèles 14 qui s'étendent selon la direction longitudinale du balai 12.

Le balai 12 est destiné à être monté à l'extrémité longitudinale libre 16 d'un bras d'essuie-glace 18 qui a pour fonction d'une part de plaquer le balai 12 contre une vitre à essuyer et d'autre part d'entraîner le balai en balayage alterné afin que celui-ci se déplace le long de la vitre.

Le balai 12 est destiné à être articulé sur le bras 18 par l'intermédiaire d'un connecteur 20 qui est monté articulé à rotation autour d'un axe transversal A1 sur le bras 18 et qui est fixé sur la portion de liaison 10 du balai 12.

Le connecteur 20 est généralement réalisé en matière plastique et il comporte pour l'essentiel deux flasques latéraux 22 réunis par un dos supérieur transversal 24. En coupe transversale, le connecteur présente ainsi une forme de U renversé et le connecteur 20 est destiné à chevaucher la portion de liaison 10 du balai 12, les deux ailes 14 de cette dernière étant reçues entre les deux flasques 22 du connecteur 20.

Les flasques 22 du connecteur 20 comportent chacun un tourillon cylindrique 26, chaque tourillon 26 s'étendant transversalement vers l'extérieur pour être reçu dans un orifice 28 aménagé dans chacune de deux joues 30 de l'extrémité libre 16 du bras 18. Les deux joues 30 s'étendent longitudinalement parallèlement l'une à l'autre de manière à former une chape, les flasques 22 du connecteur 20 étant reçus transversalement entre les deux joues 30.

Les tourillons 26 assurent donc le montage à rotation du connecteur 20 par rapport au bras 18. Dans l'exemple de réalisation illustré sur la figure 1, une pièce intermédiaire 32 est interposée entre le connecteur 20 et l'extrémité libre 16 du bras 18 pour à la fois limiter les jeux de fonctionnement et réduire l'usure et le bruit pouvant résulter du mouvement relatif du connecteur 20 par rapport aux bras 18.

De manière connue, le connecteur 20 comporte des moyens pour assurer sa fixation de manière rigide sur la portion de liaison 10 du balai 12.

Comme on peut le voir sur la figure 1, l'étrier du balai 12 présente un dos supérieur transversal 34 qui relie les deux ailes 14 en dehors de la portion de liaison 10, laquelle est donc délimitée longitudinalement par deux bords transversaux 36, 38 du dos 34.

Pour assurer l'immobilisation totale du connecteur 20 par rapport au balai 12, il suffit donc d'empêcher tout mouvement de retrait vertical vers le haut du connecteur 20 par rapport à la portion de liaison 10.

Pour ce faire, le connecteur 20 comporte un verrou coulissant 40 qui est monté en coulissement dans une lumière 42 aménagée dans le dos supérieur 24 du connecteur 20. Le verrou 40 est destiné à coopérer avec un élément transversal 44 qui relie les deux ailes 14 de la portion de liaison 10.

Dans cet exemple de réalisation de l'invention, l'élément transversal 44 du balai 12 est réalisé par continuité de matière avec les ailes 14 de la portion de liaison 10.

L'élément transversal 44 présente une forme de plaque horizontale qui relie les deux bords longitudinaux supérieurs des ailes 14 sur une partie de la longueur de la portion de liaison 10.

L'élément transversal 44 comporte de plus une fente longitudinale 50 qui s'étend longitudinalement sur environ 1 les trois-quarts de sa longueur et qui débouche longitudinalement dans un bord avant 52 de l'élément transversal 44. La fente 50 est agencée symétriquement au centre des deux ailes 14 selon la direction transversale.

Le verrou coulissant 40 comporte pour l'essentiel une plaque supérieure de manipulation 54, sensiblement horizontale, depuis une face inférieure de laquelle s'étend un pied vertical 56 qui, lorsque le connecteur 20 est monté sur la portion de liaison 10 du balai 12, s'étend entre les deux ailes 14 du balai 12.

À son extrémité inférieure, le pied 56 comporte deux protubérances 64 qui s'étendent transversalement vers l'extérieur, l'une à l'opposé de l'autre.

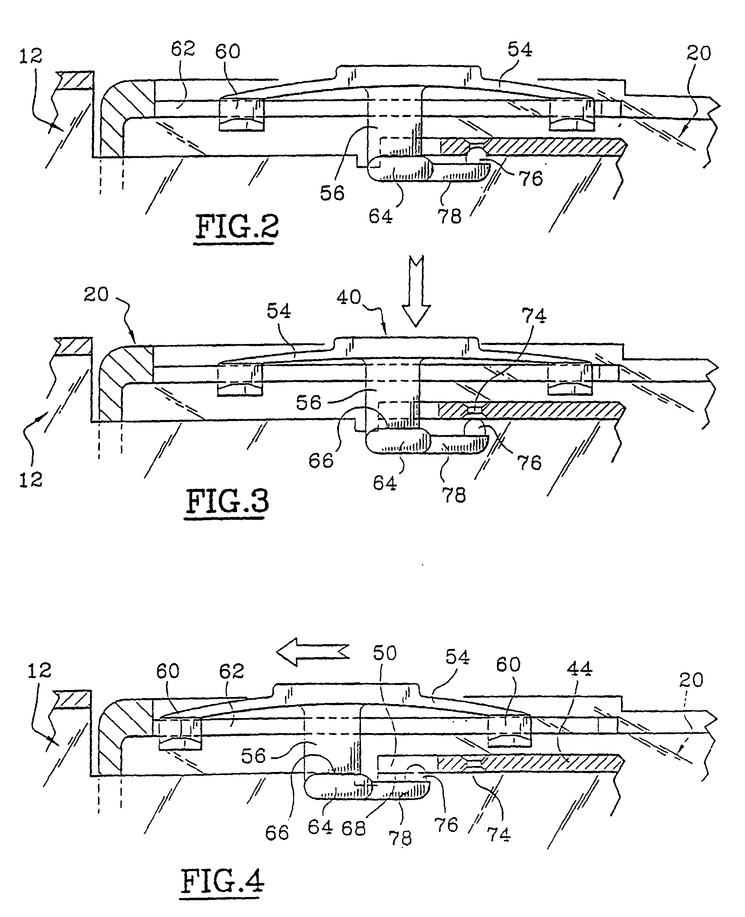

Le verrou 40 est destiné à coulisser par rapport au connecteur 20 et par rapport au balai 12 entre une position avancée de déverrouillage, dans laquelle au moins les protubérances 64 sont agencées longitudinalement en avant du bord avant 52 de l'élément transversal 44, et une position reculée de verrouillage dans laquelle le pied 56 est agencé en travers de la fente 50, les protubérances 64 étant agencées en dessous du niveau de l'élément transversal 44. Ainsi, comme on peut le voir à la figure 2, des faces supérieures 66 des protubérances 64 se trouvent verticalement en regard des faces inférieures 68 de l'élément transversal 44 qui sont agencées transversalement de part et d'autre de la fente 50, empêchant tout retrait vers le haut de l'ensemble du connecteur 20 et du verrou 40 par rapport au balai 12.

Par ailleurs, l'élément transversal 44 comporte, longitudinalement juste en arrière de la fente 50, un perçage 74 qui est destiné à recevoir un doigt 76 qui s'étend verticalement à l'extrémité libre d'une barre horizontale 78 qui s'étend longitudinalement vers l'arrière depuis une extrémité inférieure du pied 56, sensiblement dans le même plan horizontal que les protubérances 64. Comme on peut le voir sur la figure 2, lorsque le connecteur est reculé en position de verrouillage, le doigt 76 de la barre 78 vient s'engager dans le perçage 74 pour assurer l'immobilisation du verrou 40. Au contraire, comme on peut le voir sur la figure 4, lorsque le verrou est en position avancée de déverrouillage, la barre 78 et son doigt 76 sont agencés verticalement en regard de la fente 50, ce qui permet d'assurer la possibilité de montage ou de démontage du connecteur 20 et de son verrou 40 par rapport au balai 12, par simple déplacement vertical.

Conformément aux enseignements de l'invention, le passage du verrou 40 de sa position de verrouillage à sa position de déverrouillage ne peut se faire sans l'intervention d'un utilisateur.

En effet, la barre 78 est relativement rigide de sorte que, lorsque le doigt 76 est engagé dans le perçage 74, le verrou 40 ne peut avancer vers sa position de déverrouillage.

Au contraire, il est prévu que la plaque supérieure de manipulation du verrou 40 soit déformable élastiquement entre une position libre illustrée aux figures 2 et 4 et une position déformée illustrée à la figure 3.

À l'état libre, la plaque de manipulation 54 s'étend sensiblement selon un arc de cercle à concavité tournée vers le bas de telle sorte qu'elle ne coopère avec des rails de guidage 62, qui forment les bords longitudinaux de la lumière 42 du connecteur 20, que par ses deux extrémités longitudinales. Comme on peut le voir particulièrement sur la figure 1, la plaque de manipulation 54 du verrou 40 comporte en effet, à chacune de ses extrémités longitudinales, des moyens 60 qui permettent d'assurer son guidage en coulissement longitudinal sur les rails 62 du connecteur 20, sens empêcher le déplacement vertical de la partie centrale de la plaque 54 lorsque celle-ci est déformée.

La partie centrale de la plaque de manipulation 54, depuis laquelle s'étend vers le bas le pied d'accrochage 56, s'étend donc à ce moment là au-dessus du niveau de ses deux extrémités longitudinales, de sorte que le pied 56 occupe une position haute par rapport au balai 12. Dans cette position, lorsque le verrou 40 est en position de verrouillage, le doigt 76 est complètement engagé dans le perçage 74, ainsi qu'on peut le voir à la figure 2.

Au contraire, comme cela est représenté à la figure 3, lorsque l'utilisateur vient comprimer la plaque 54, en appuyant verticalement vers le bas sur la portion centrale de celle-ci, il provoque un aplatissement de la plaque 54 de telle sorte que le pied d'accrochage 56 est amené vers une position basse par rapport au balai 12. La barre horizontale 78 étant liée à l'extrémité inférieure du pied d'accrochage 56, le doigt 76 se trouve alors dégagé verticalement vers le bas du perçage 74.

Une fois le doigt 76 dégagé, l'utilisateur peut alors faire coulisser le verrou 40 vers l'avant vers sa position de déverrouillage illustrée à la figure 4.

Cette conception du verrou 40 permet de s'assurer que le verrou 40 ne peut pas passer accidentellement de sa position de verrouillage à sa position de déverrouillage, même sous l'effet d'intenses vibrations ou sous l'effet d'un choc avec un objet.

Dans le mode de réalisation de l'invention, l'immobilisation du verrou 40 n'est prévue que dans sa position de verrouillage. Cependant, on peut aussi prévoir, sans sortir du cadre de l'invention, que le verrou 40 soit immobilisé en position de déverrouillage.

De même, on peut prévoir que l'immobilisation du verrou 40 soit assurée par coopération d'un élément du verrou 40 avec un élément du connecteur 20.

## Revendications

1. Essuie-glace de véhicule automobile, du type comportant un balai d'essuie-glace (12) articulé à une extrémité libre (16) d'un bras d'essuie-glace (18) par l'intermédiaire d'un connecteur (20) qui chevauche une portion de liaison (10) du balai (12) munie de deux ailes longitudinales parallèles (14) entre lesquelles s'étend un élément transversal (44), du type dans lequel le connecteur (20) comporte un verrou (40) qui coulisse entre une position de déverrouillage et une position de verrouillage dans laquelle il coopère avec l'élément transversal (44) du balai (12) pour assurer la fixation du connecteur (20) sur le balai (12), et du type dans lequel le verrou (40) comporte une plaque supérieure de manipulation (54),
**caractérisé en ce que** la plaque supérieure de manipulation (54) est déformable élastiquement selon une direction perpendiculaire à la direction de coulissement du verrou (40), et **en ce qu'**elle porte des moyens d'immobilisation (76) du verrou (40) qui, lorsque le verrou (40) est à l'état libre en position de verrouillage, coopèrent avec des moyens complémentaires (74) solidaires du balai (12) pour immobiliser le verrou, et qui, lorsque la plaque (54) est déformée, sont dégagés desdits moyens complémentaires (74) pour permettre le coulissement du verrou (40).

2. Essuie-glace selon la revendication 1, **caractérisé en ce que** le verrou (40) comporte des moyens d'accrochage (56) qui s'étendent vers le bas depuis une face inférieure de la plaque de manipulation (54) et qui sont destinés à coopérer, lorsque le verrou (40) est en position de verrouillage, avec une face inférieure (68) de l'élément transversal (44), et **en ce que** les moyens d'accrochage (56) portent les moyens d'immobilisation (76) du verrou (40).

3. Essuie-glace selon l'une quelconque des revendications précédentes, **caractérisé en ce que** les moyens d'immobilisation sont constitués par un doigt (76) d'orientation verticale, et les moyens complémentaires sont constitués par un évidement complémentaire (74) dans lequel le doigt (76) est reçu lorsque le verrou (40) est à l'état libre.

4. Essuie-glace selon la revendication 3 prise en combinaison avec la revendication 2, **caractérisé en ce** le doigt d'immobilisation (76) s'étend verticalement vers le haut depuis les moyens d'accrochage (56, 78), et en ce que l'évidement (74) est aménagé dans la face inférieure de l'élément transversal (44).

5. Essuie-glace selon l'une des revendications 2 ou 4, **caractérisé en ce que** la plaque supérieure de manipulation (54) comporte, à chacune de ses extrémités longitudinales, des moyens (60) de guidage en coulissement du verrou (40) sur le connecteur (20), et **en ce qu'**une partie centrale de la plaque (54), qui porte les moyens d'accrochage (56), est susceptible d'être déplacée verticalement par déformation élastique de la plaque (54).

6. Essuie-glace selon la revendication 5, **caractérisé en ce que**, à l'état libre, la plaque supérieure (54) présente un profil en arc de cercle à concavité tournée vers le bas.

## Claims

1. A motor vehicle wiper of the type comprising a wiper blade (12) articulated at a free end (16) of a wiper arm (18) by means of a connector (20) which straddles a connecting portion (10) of the blade (12) provided with two parallel longitudinal wings (14) between which a transverse element (44) extends, of the type in which the connector (20) has a lock (40) which slides between an unlocked position and a locked position in which it cooperates with the transverse element (44) of the blade (12) in order to provide the fixing of the connector (20) on the blade (12) and of the type in which the lock (40) has a top manipulation plate (54),
**characterised in that** the top manipulation plate (54) is elastically deformable in a direction perpendicular to the direction of sliding of the lock (40), and **in that** it carries means (76) of immobilising the lock (40) which, when the lock (40) is in the free state in the locked position, cooperate with complementary means (74) fixed to the blade (12) in order to immobilise the lock, and which, when the plate (54) is deformed, are released from said complementary means (74) to allow the sliding of the lock (40).

2. A wiper according to Claim 1, **characterised in that** the lock (40) has attachment means (56) which extend downwards from a bottom face of the manipulation plate (54) and which are intended to cooperate, when the lock (40) is in the locked position, with a bottom face (68) of the transverse element (44), and **in that** the attachment means (56) carry the means (76) of immobilising the lock (40).

3. A wiper according to any one of the preceding claims, **characterised in that** the immobilisation means consist of a vertically oriented finger (76), and the complementary means consist of a complementary recess (74) in which the finger (76) is received when the lock (40) is in the free state.

4. A wiper according to Claim 3 taken in combination with Claim 2, **characterised in that** the immobilisation finger (76) extends vertically upwards from the attachment means (56, 78), and **in that** the recess (74) is provided in the bottom face of the transverse element (44).

5. A wiper according to one of Claims 2 or 4, **characterised in that** the top manipulation plate (54) has, at each of its longitudinal ends, means (60) for the sliding guidance of the lock (40) on the connector (20), and **in that** a central part of the plate (54), which carries the attachment means (56), is able to be moved vertically by elastic deformation of the plate (54).

6. A wiper according to Claim 5, **characterised in that**, in the free state, the top plate (54) has a profile in the form of an arc of a circle with its concavity turned downwards.

## Patentansprüche

1. Scheibenwischer für ein Kraftfahrzeug des Typs mit einem Scheibenwischerblatt (12), das an einem freien Ende (16) eines Scheibenwischerarms (18) angelenkt ist, und zwar mittels eines auf einem Verbindungsabschnitt (10) des Blatts (12) sitzenden Verbindungsstücks (20), das zwei parallele Längsschenkel (14) aufweist, zwischen denen sich ein Querelement (44) erstreckt, wobei das Verbindungsstück (20) einen Riegel (40) umfasst, der zwischen einer entriegelten Position und einer verriegelten Position verschiebbar ist, in der er mit dem Querelement (44) des Blatts (12) zusammenwirkt, um die Befestigung des Verbindungsstücks (20) am Blatt (12) zu gewährleisten, und wobei der Riegel (40) eine obere Bedienungsplatte (54) aufweist, **dadurch gekennzeichnet, dass** die obere Bedienungsplatte (54) nach einer lotrecht zur Verschiebungsrichtung des Riegels (40) verlaufenden Richtung elastisch verformbar ist, und dass sie Blockierungsmittel (76) des Riegels (40) trägt, die, wenn sich der Riegel (40) in freiem Zustand in verriegelter Position befindet, mit komplementären, zum Blatt (12) gehörigen Mitteln (74) zusammenwirken, um den Riegel zu blockieren, und die, wenn die Platte (54) verformt wird, aus den besagten komplementären Mitteln (74) befreit werden, um das Verschieben des Riegels (40) zu ermöglichen.

2. Scheibenwischer nach Anspruch 1, **dadurch gekennzeichnet, dass** der Riegel (40) Einhakmittel (56) umfasst, die sich von einer Unterseite der Bedienungsplatte (54) nach unten erstrecken und mit einer Unterseite (68) des Querelements (44) zusammenwirken sollen, wenn sich der Riegel (40) in verriegelter Position befindet, und dass die Einhakmittel (56) Blockierungsmittel (76) des Riegels (40) tragen.

3. Scheibenwischer nach einem der vorherigen Ansprüche, **dadurch gekennzeichnet, dass** die Blockierungsmittel aus einem vertikal ausgerichteten Finger (76) bestehen, und dass die komplementären Mittel aus einer komplementären Vertiefung (74) bestehen, in die der Finger (76) eingreift, wenn sich der Riegel (40) in freiem Zustand befindet.

4. Scheibenwischer nach Anspruch 3 kombiniert mit Anspruch 2, **dadurch gekennzeichnet, dass** sich der Blockierungsfinger (76) von den Einhakmittel (56, 78) aus vertikal nach oben erstreckt, und dass die Vertiefung (74) in der Unterseite des Querelements (44) vorgesehen ist.

5. Scheibenwischer nach einem der Ansprüche 2 oder 4, **dadurch gekennzeichnet, dass** die obere Bedienungsplatte (54) an jedem ihrer Längsenden Führungsmittel (60) für die Verschiebung des Riegels (40) auf dem Verbindungsstück (20) umfasst, und dass ein mittlerer Teil der Platte (54), die die Einhakmittel (56) trägt, durch elastische Verformung der Platte (54) vertikal verschoben werden kann.

6. Scheibenwischer nach Anspruch 5, **dadurch gekennzeichnet, dass** die obere Platte (54) in freiem Zustand ein kreisbogenförmiges Profil mit nach unten gerichteter Konkavität aufweist.
